Europäisches Patentamt

European Patent Office

Office européen des brevets

(19)

(11) Publication number: **0 164 152**
A2

(12) # EUROPEAN PATENT APPLICATION

(21) Application number: 85200689.9

(22) Date of filing: 02.05.85

(51) Int. Cl.⁴: **G 09 F 9/30**, G 02 F 1/133

(30) Priority: 08.05.84 CH 2244/84

(43) Date of publication of application: 11.12.85
Bulletin 85/50

(84) Designated Contracting States: CH DE FR GB LI

(71) Applicant: **N.V. Philips' Gloeilampenfabrieken,**
Groenewoudseweg 1, NL-5621 BA Eindhoven (NL)

(72) Inventor: **Neumann, Ludwig, c/o INT. OCTROOIBUREAU**
B.V. Prof. Holstlaan 6, NL-5656 AA Eindhoven (NL)

(74) Representative: **Raap, Adriaan Yde et al,**
INTERNATIONAAL OCTROOIBUREAU B.V. Prof.
Holstlaan 6, NL-5656 AA Eindhoven (NL)

(54) **Electro-optical display device.**

(57) In an electro-optical display device for alpha-numerical characters having dot-shaped display elements (9) arranged in the form of a matrix (8) a reduction of the control cost is achieved by pairwise interconnecting selected display elements, which provides significant advantages in particular for display devices in LCD technology which operate in multiplexing operation.

## Electro-optical display device.

The present invention relates to an alphanumerical electro-optical display device having at least one character which is composed of a plurality of individual dot-shaped display elements, in which the display elements can be controlled electrically and be optically activated by the electric control and are arranged in the form of a matrix in lines and columns. Such a display device is known, for example, from "Elektroniker" No. 2, 1980, p.EL1 - EL5.

Alpha-numerical display devices of the known type customarily comprise several characters which are arranged beside each other to form a line and enable the simultaneous display of, for example, 4, 16 or 32 characters. Each individual character consists of a plurality of dot-shaped display elements which are arranged in the form of a matrix ( 5 x 7; 7 x 11 or differently). The individual display elements may operate according to different principles and may, for example, be in the form of a LED (Light Emitting Diode), LCD (Liquid Crystal Display), fluorescent or plasma display.

The individual control of each display element requires, for a character in the form of a (5 x 7) matrix, 35 control lines, hence 560 control lines in a 16 character line which are associated with the 560 display elements of said line. Such an individual control of the display elements hence  leads to high wiring costs, which simultaneously is associated with high costs of control electronics.

In order to reduce the costs of controlling it is furthermore known (Elektronik", Volume 4, 1976, pp 36-42) to control the display elements of a character and a line respectively, in time multiplexing operation. With a multiplexing ratio of  1 : 8  the number of control lines in the said example is reduced from 560 to 70 so that a considerable simplification of the control can be achieved.

In control devices which are constructed in the form of LCD technology the viewing angle range is made narrower and the contrast is reduced when the multiplexing ratio is increased. Such a deterioration of the readability, however, cannot be tolerated with unfavourable light and viewing angle ratios as they occur, for example, for a display device on the dashboard of a motor-car.

Hence the possibility should be present for certain applications to control line displays with a multiplexing ratio of only  1 : 2  or at least  1 : 4. For the first-mentioned multiplexing ratio the 560 control lines of a 16 character line are reduced by ( 5 x 7) dot characters to 280 control lines. Inspite of this reduction disproportionately high control costs remain which decesively determine the cost of manufacture of the display device and make the use of large series doubtful.

It is therefore an object of the present invention to provide an electro-optical display device which on the one hand can be operated in time multiplexing operation with a low multiplexing ratio and on the other hand is distinguished from the known display devices by a reduced control consts.

According to the invention, a display device of the kind mentioned in the opening paragraph is characterized in that selected display elements are connected together pairwise so that the display elements of the same pair are always optically activated simulatneously.

The pairwise connection of selected display elements of a character according to the invention permits the display of alphanumerical characters in a certain form with simultaneous reduction of the number of control lines and hence the cost of control. Preferred embodiments of the invention will become apparent from the sub-claims.

The invention will now be described in greater detail with reference to the accompanying drawing, in which

Figure 1 shows diagrammatically the various individual and pairwise connected display elements in a (5 x 7) matrix character according to a preferred embodiment of the invention;

Figure 2 shows a first configuration of the counter electrode of an LCD (5 x 7) matrix according to the preferred embodiment for a multiplexing ratio 1 : 2;

Figure 3 shows the configuration of the main electrode associated with the counter electrode of Fig. 2;

Figure 4 shows a second configuration of the counter electrode of an LCD (5 x 7) matrix according to the preferred embodiment for a multiplexing ratio 1 : 4;

Figure 5 shows the configuration of the main electrode associated with the counter electrode according to Fig. 4;

Figure 6 shows various alphanumerical characters on a (5 x 7) dot character according to the preferred embodiment;

Figure 7 shows a preferred control circuit for a line with characters according to Figs. 2 and 3.

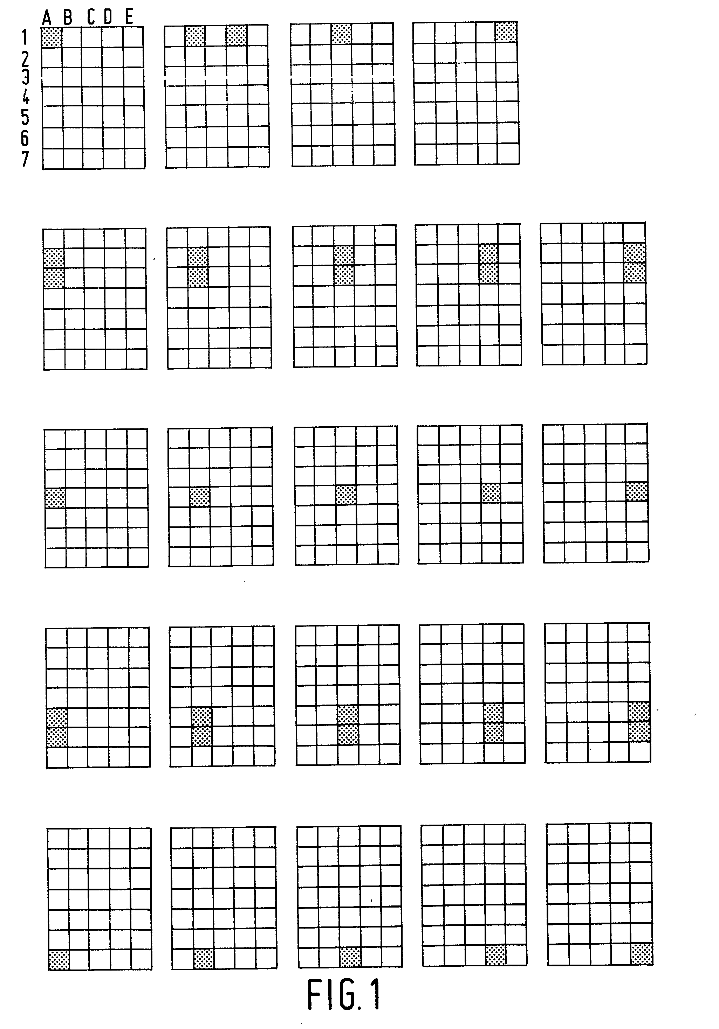

Figure 1 shows successively the 24 different elementary display states of a (5 x 7) character with five columns A, ... E and seven lines 1, ... 7, from which, according to a preferred embodiment of the invention, the various alphanumerical characters (letters, numerals, punctuation marks) are composed by combination.

The character has the form of a matrix 8 with 35 individual display elements 9 which are shown diagrammatically in Fig. 1 as juxtaposed squares. The display elements optically activated in an elementary display condition are shown as full black squares.

It may be seen that in the embodiment of Fig. 1 the display elements of line 4 of line 7 can each be optically activated, that on the other hand each time the second and third as well as the fifth and sixth display element of each column A ... E are activated optically only pairwise. In line 1 of the character the second and fourth display element are combined to form a pair while the remaining display elements of said line can be optically activated individually.

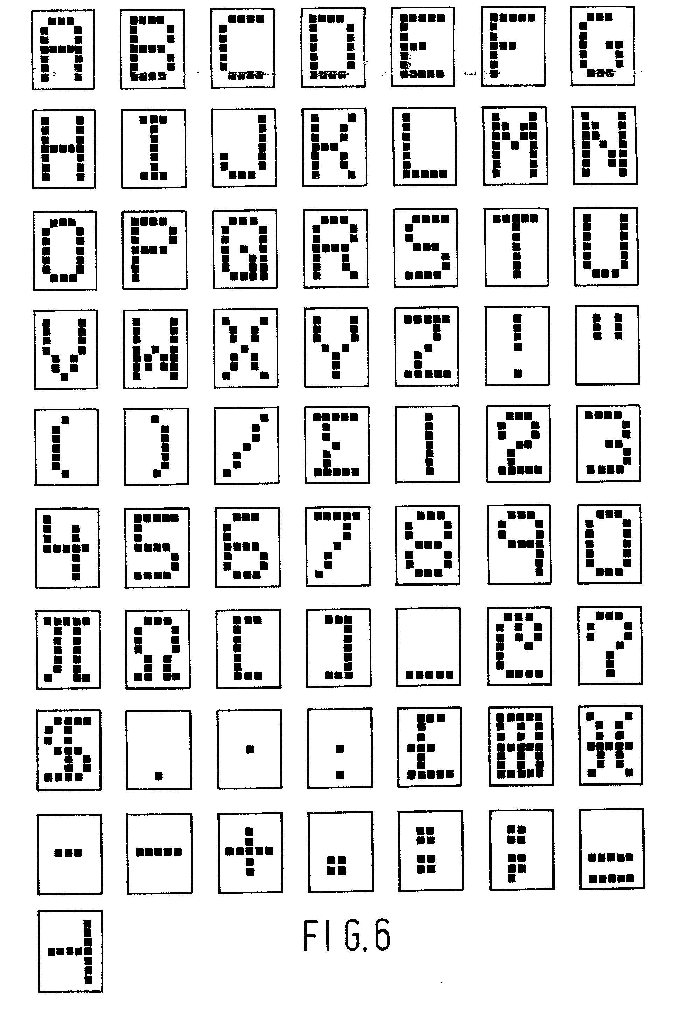

By combination of various elementary display conditions of Fig. 1 a great number of alphanumerical characters can be composed, as already stated, of which a few are shown in Fig. 6.

The display elements are preferably constructed in LCD technology. Each display element comprises a counter electrode, a main electrode and a liquid crystal layer present between the two electrodes. The pairwise connection of selected display elements, as appears from Fig. 1, is produced by suitable electrically conductive connections each time between the counter electrodes and the main electrodes, respectively, of various display elements. It is particularly advantageous to provide a liquid crystal layer which is common to all the display elements for the matrix of a character or in a line consisting of several characters for the whole line, so that the individual display elements are formed only by the special configuration of the counter electrodes and the oppositely located main electrodes in a common liquid crystal cell.

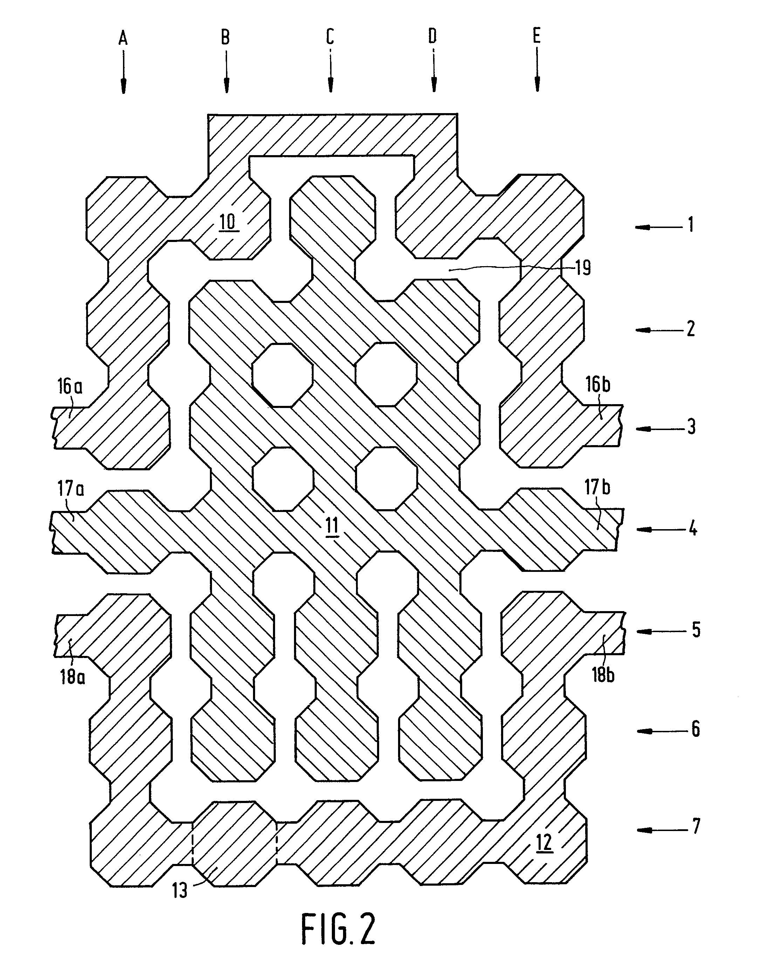

A first configuration of the counter electrode for a character according to the preferred embodiment is shown in Fig. 2. For each of the 35 display elements of the (5 x 7) dot characters an individual counter electrode 13 is provided in the form of an irregular octagon. The 35 counter electrodes 13 are connected in three groups.

When the display elements of the character matrix are characterized by the numeral of the associated matrix line and the letter of the associated matrix column, the first group comprises the counter electrodes of the display elements 1A, 1B, 1D, 1E, 2A, 2E, 3A and 3E and forms a coherent upper counter electrode 10. The second group comprises the counter electrodes of the display elements 5A, 5E, 6A, 6E, 7A, 7B, 7C, 7D and 7E and forms a coherent lower counter electrode 12. The third group comprises all the remaining counter electrodes and forms a coherent central counter electrode 11.

When the character forms part of a line consisting of several characters, left and right electrode connections 16a, 16b, 17a, 17b and 18a, 18b, may be provided on the left and right hand sides of the upper counter electrode 10, of the central counter electrode 11, and of the lower counter electrode 12, <u>via</u> which connections corresponding counter electrodes of adjacent characters can be connected together so as to be electrically conductive. In this manner the whole line has a common upper, central and lower counter electrode.

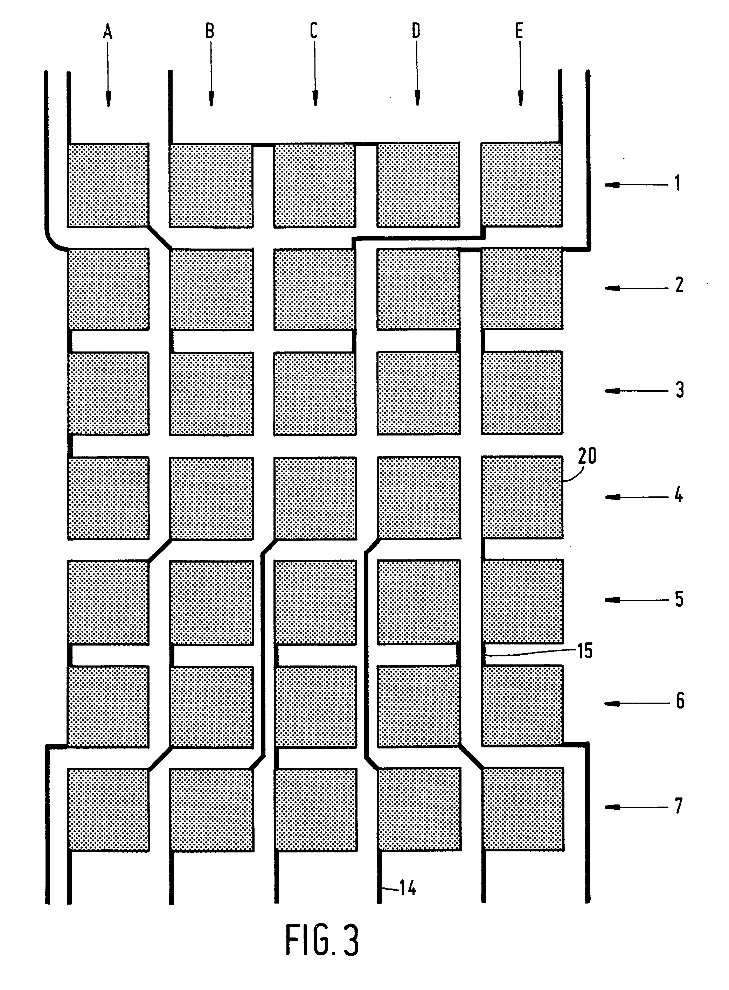

The main electrode configuration associated with the counter electrode configuration of Fig. 2 is shown in Fig. 3. Whereas in Fig. 2 the electrode surfaces are shaded, the corresponding surfaces and connection lines are now shown as black squares and lines for clarity.

The square individual main electrodes 20 of the display elements in this case also are combined to form groups, each group comprising at least two and at most four display elements. The character totally has twelve groups of main electrodes 20 which comprise the following display elements:

| | |
|---|---|
| 1st Group: 1A, 2B, 3B | 7th Group: 4C, 7B |
| 2nd Group: 1B, 1C, 1D | 8th Group: 4D, 7D |
| 3rd Group: 1E, 2C, 3C | 9th Group: 4E, 5E, 6E |
| 4th Group: 2A, 3A, 4A | 10th Group: 5B, 6B, 7A |
| 5th Group: 2D, 2E, 3D, 3E | 11th Group: 5C, 6C, 7C |
| 6th Group: 4B, 5A, 6A | 12th Group: 5D, 6D, 7E |

Within each of these groups the main electrodes 20 are electrically conductively connected together by connection lines 15. The connection lines 15 are provided so that the intermediate spaces 19 between the counter electrofes of Fig. 2 are oppositely located. In this manner undesired crossings between counter electrodes and main electrodes are avoided which might lead to the formation of additional stray display elements.

Each of the twelve main electrode groups can be controlled from without by an individual connection line 14 so that per character twelve control lines for the main electrodes are present. The combination of the main electrodes 20 to form groups has been chosen to be so that in none of the twelve groups two display elements are present one of which has its counter electrode 13 within the upper counter electrode 10 and the other of which has its counter electrode 13 within the lower counter electrode 12. The upper counter electrode 10 and the lower counter electrode 12 may hence be conductively connected and be controlled in common without losing one of the elementary control conditions of Fig. 1.

The control of the upper, central and lower counter electrodes 11, 12, and of the twelve groups of main electrodes occurs in duplex operation *i.e.* in a time multiplexing method with a multiplexing ratio of 1 : 2. For that purpose, on the one hand the central counter electrode 11 and on the other hand the upper and lower counter electrodes 10 and 12 are alternately controlled. Synchronously with said control of the counter electrodes each time only those main electrode groups are selected *via* the connection line 14 which in cooperation with the just controlled counter electrodes optically activate the desired display elements.

The manner of controlling will be described hereinafter with reference to an example:

In order to display within a character the letter "A" in the form shown in Fig. 6, 13 of the 24 possible elementary display conditions of Fig. 1 must be combined, namely the display conditions with the individual display elements 1C, 4A, ..., 4E, 7A, 7E and the display conditions with the elementary pairs 1B/1D, 2A/3A, 2E/3E, 5A/6A and 5D/6D. This combination is realized by a control of the central counter electrode 11 and of the second, fourth, sixth, seventh, eight and nineth group of main electrodes 20 in one phase of the duplex operation and a control of the upper and lower counter electrodes 10 and 12 toegether with the second, fourth, fifth, sixth, ninth, tenth and twelfth group of main electrodes 20 in the other phase of duplex operation. Corresponding combinations of counter

0164152

electrodes and main electrode groups varying in time can be indicated for the other alphanumerical characters of Fig. 6. The choice of the electrode potentials suitable for the control is known from LCD technology.

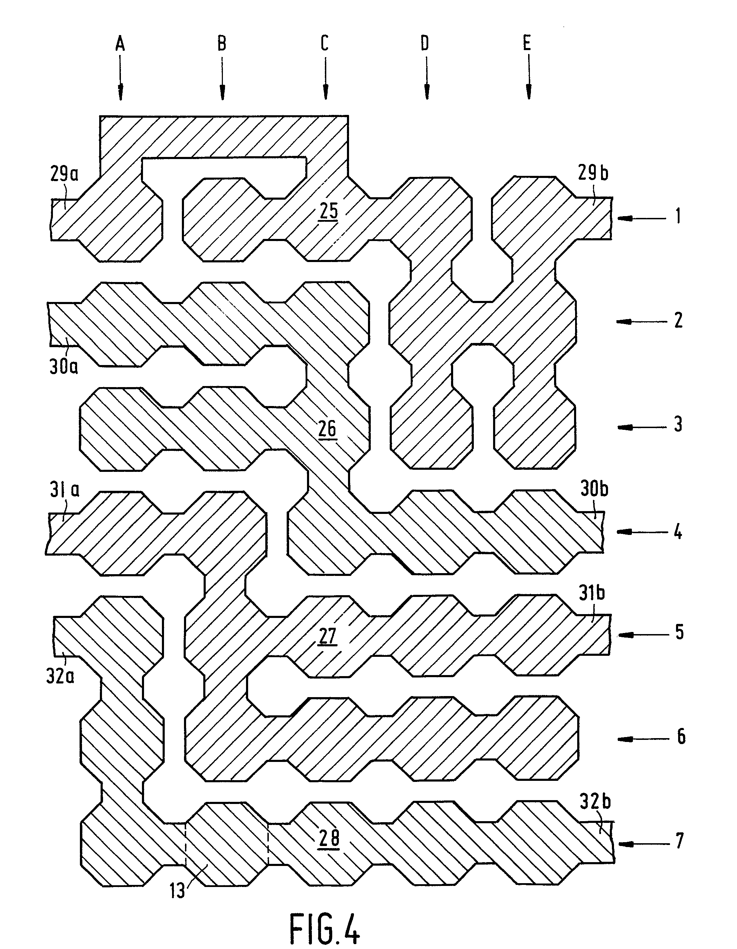

A second configuration of the counter electrode for a character according to the preferred embodiment is shown in Fig. 4. This second counter electrode configuration is designed for a multiplexing operation of the display device with a multplexing ratio 1 : 4.

In this case also, as in the Fig. 2 configuration, an individual counter electrode 13 in the form of an irregular octagon is provided for each of the 35 display elements of the (5 x 7) dot character. The 35 counter electrodes 13, however, are now combined in four instead of three groups, the counter electrodes of the display elements 1A, ... 1E, 2D, 2E, 3D and 3E forming a coherent upper counter electrode 25, the counter electrodes of the display elements 2A, 2B, 2C, 3A, 3B, 3C, 4C, 4D and 4E forming a coherent first central counter electrode 26, the counter electrodes of the display elements 4A, 4B, 5B, ... 5E, 6B, ... 6E forming a coherent second central counter electrode 27, and the counter electrodes of the remaining display elements 5A, 6A, 7A, ... 7E forming a coherent lower counter electrode 28 which can be recognized by different shading in Fig. 4.

If the character again forms part of a line consisting of several characters, left and right electrode connections 29a, 29b, 30a, 30b, 31a, 31b, 32a and 32b may be provided in this case also on the left and right hand sides of the upper counter electrode 25, of the two central counter electrodes 26 and 27, and of the lower counter electrode 28, via which connections corresponding counter electrodes of adjacent characters can be interconnected so as to be electrically conductive.

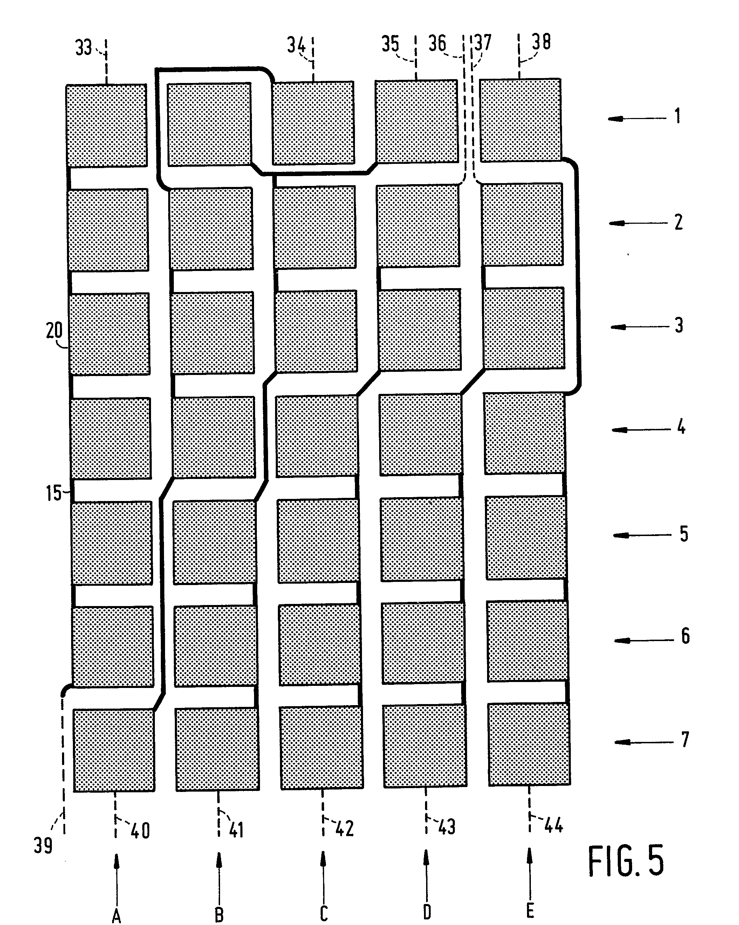

The main electrode configuration associated with the counter electrode configuration of Fig. 4 is shown in Fig. 5. In this case also, as in Fig. 3, the electrode surfaces which are transparent and the connection lines are shown as full black surfaces.

The main electrodes 20 of Fig. 5 are combined in six groups which comprise the following display elements:

> 1st Group: 1A, ..., 6A
>
> 2nd Group: 1C, 2B, 3B, 4B, 7A
>
> 3rd Group: 1B, 1D, 2C, 3C, 5B, 6B, 7B
>
> 4th Group: 2D, 3D, 4C, ..., 7C
>
> 5th Group: 2E, 3E, 4D, ..., 7D
>
> 6th Group: 1E, 4E, ..., 7E

Within each of these groups the main electrodes 20 are again interconnected so as to be electrically conductive by suitably made connection lines 15.

The main electrode configuration shown in Fig. 5 provides particular advantages with respect to the electric connections of the individual groups. Twelve connection lines 33-44 are shown in broken lines in Fig. 5, two connection lines being associated with each main electrode group. Of the twelve connection lines 33-34 given by way of example, the upper six 33-38 or the lower six 39-44 can be realized when all the main electrode connections are to be made on one side of the character.

If on the contrary connections on two sides are desired, for example, the connection lines 33, 34, 38, 41, 42 and 43 may be used in combination. In this manner all possible contacting cases for the display device can be realized.

The control of the counter and main electrodes in the 1 : 4 multiplexing operation occurs analoguously to the already described duplex operation of the character according to Figs. 2 and 3, with the difference that in the now four different phases of the multiplexing operation each time only one of the four counter electrode groups is controlled.

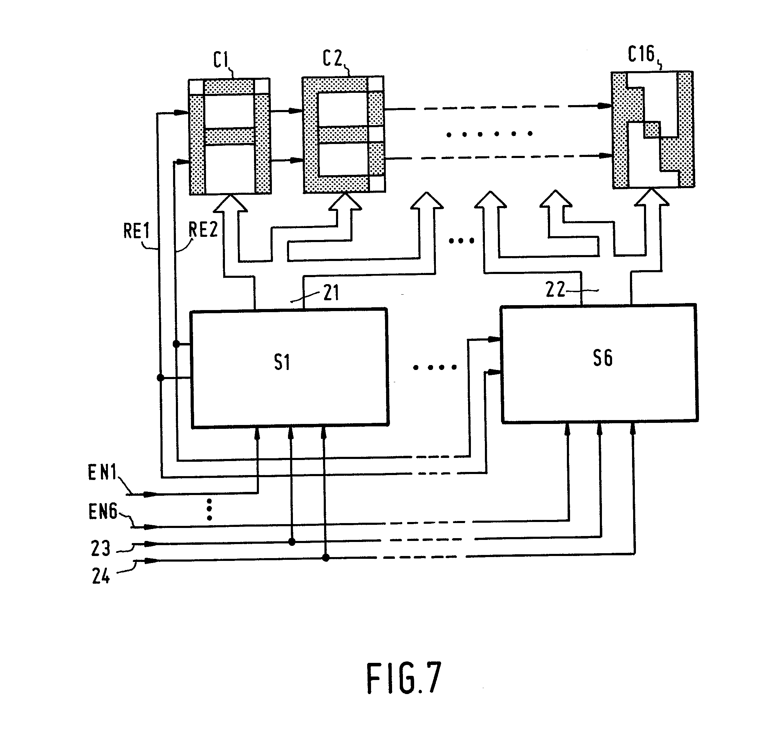

The complete control circuit of a 16 character LCD line for duplex operation constructed with (5 x 7) characters shown in Fig. 2 is shown in Fig. 7. For clarity only the first, second and last character, C1, C2 and C16 of the 26 characters of the line are shown. For controlling the line a plurality of control circuits are provided of which the first, S1, and the last, S6, are shown.

As control circuits may be used, for example the integrated circuits of the type PCE 2111 of "Philips" intended for the duplex operation of LCD displays. Said ICs each have 32 driver outputs for controlling 32 different display elements as well as two outputs for controlling two different counter electrodes in the duplex method.

In the Fig. 7 circuit the upper and lower counter electrodes 10 and 12 of all the characters C1, C2, C16 are connected in common via a second counter electrode line RE2 to the second counter electrode output of the first control circuit S1. In a corresponding manner the central counter electrodes 11 of all the characters C1, C2, C16 are connected via a first counter electrode line RE1 to the first control circuit S1. Moreover, the corresponding counter electrode outputs of all the control circuits S1, S6 are interconnected to match the controls of all the characters of the line with each other.

Of the 32 driver outputs of each control circuit S1, S6, 32 driver lines 21, 22 lead to the various associated characters. Since in twelve main electrode groups per character only each time twelve of the 32 driver lines 21, 22 per character are required, the totality of the driver lines of a control circuit is distributed over various characters.

As already stated hereinbefore, 560 driver lines are required for the control of a 16 character line with (5 x 7) characters without time multiplexing method. By using the duplex method in the known type the number of driver lines is halved to 280 so that for the control in this case 9 integrated circuits of the type PCE 2111 with totally 280 driver lines must be used.

As a result of the pairwise combination according to the invention of selected display elements within a character, the required number of driver lines of 280 is again reduced to 16x12 = 192, so that for the control now 6 integrated circuits of the type PCE 2111 with totally exactly 192 driver outputs are sufficient.

The control of the control circuits S1, S6 occurs in known manner _via_ corresponding clock burst inputs 23 data inputs 24 and data-line-enable-inputs EN1, EN6, whose operation can be derived from the data of the various control circuits.

An analogous construction of the control for a 16 character line with characters according to Figs. 4 and 5 for 1 : 4 multiplexing operation can accordingly be realized simply.

Totally a considerable reduction of the control costs occurs for the electro-optical display device according to the invention with low multiplexing ratio remaining the same (in the preferred embodiment of the 16-character-line operated in duplex method with (5 x 7) dot characters in LCD technology a reduction of the integrated control circuits of 9 to 6), which enables a large series manufacture with low costs of such devices for certain applications.

0164152

1.       An alpha-numerical electro-optical display device having at least one character (C1, C2, C16), which character C1, C2, C16 is composed of a plurality of individual dot-shaped display elements (9), in which the display elements can be controlled electrically and be optically activated by an electric control and are arranged in the form of a matrix (8) in lines (1, ... 7) and columns (A, ... E), characterized in that selected display elements are connected together pairwise so that the display elements of the same pair are always optically activated simultaneously.

2.       An electro-optical display device as claimed in Claim 1, characterized in that the matrix (8) of the character (C1, C2, C16) comprises 35 display elements (9) as matrix elements (1A, ... 7E), which display elements (9) are arranged in five columns (A, ... E) and seven lines (1, ... 7) of a (5 x 7) matrix, and that each time the second (2A, ... 2E) and third (3A, ... 3E), as well as the fifth (5A, ... 5E) and sixth (6A, ... 6E) matrix elements of each column (A, ... E) and the second (1B) and fourth (1D) matrix elements of the first line (1) are connected together to form a pair.

3.       An electro-optical display device as claimed in Claim 2, characterized in that the display elements (9) are liquid crystal displays having a liquid crystal layer between a counter electrode (13) and a main electrode (20) and that within the character (C1, C2, C16) the counter electrodes (13) of the display elements (9) are divided into three groups and the main electrodes (20) of the display elements (9) are divided into twelve groups and within each group are electrically conductively connected together.

4.       An electro-optical display device as claimed in Claim 3, characterized in that the three groups of the
counter electrodes (13) comprise the following matrix elements:

>1st Group: 1A, 1B, 1D, 1E, 2A, 2E, 3A, 3E
>
>2nd Group: 5A, 5E, 6A, 6E, 7A, ..., 7E
>
>3rd Group: all other matrix elements,

and that the twelve groups of the main electrodes (20) comprise the following matrix elements:

>1st Group: 1A, 2B, 3B
>
>2nd Group: 1B, 1C, 1D
>
>3rd Group: 1E, 2C, 3C
>
>4th Group: 2A, 3A, 4A
>
>5th Group: 2D, 2E, 3D, 3E
>
>6th Group: 4B, 5A, 6A
>
>7th Group: 4C, 7B
>
>8th Group: 4D, 7D
>
>9th Group: 4E, 5E, 6E
>
>10th Group: 5B, 6B, 7A
>
>11th Group: 5C, 6C, 7C
>
>12th Group: 5D, 6D, 7E,

in which each matrix element is defined by the numeral of
the associated line (1, ... 7) and the letter of the associated column (A, ... E) of the matrix (8).

5.      An electro-optical display device as claimed in
Claim 2, characterized in that the display elements (9)
are liquid crystal displays having a liquid crystal layer
between a counter electrode (13) and a main electrode (20)
and that within the character (C1, C2, C16) the counter
electrodes (13) of the display elements (9) are divided
into four groups and the main electrodes (20) of the display elements (9) are divided into six groups and within
each group are electrically conductively interconnected.

6.      An electro-optical display device as claimed in
Claim 5, characterized in that the four groups of the
counter electrodes (13) comprise the following matrix
elements:

1st Group: 1A, ..., 1E, 2D, 2E, 3D, 3E

2nd Group: 2A, 2B, 2C, 3A, 3B, 3C, 4C, 4D, 4E

3rd Group: 4A, 4B, 5B, ..., 5E, 6B, ..., 6E

4th Group: 5A, 6A, 7A, ..., 7E,

and that six groups of the main electrodes (20) comprise the following matrix elements:

1st Group: 1A, ..., 6A

2nd Group: 1C, 2B, 3B, 4B, 7A

3rd Group: 1B, 1D, 2C, 3C, 5B, 6B, 7B

4th Group: 2D, 3D, 4C, ..., 7C

5th Group: 2E, 3E, 4D, ..., 7D

6th Group: 1E, 4E, ..., 7E,

in which each matrix element is defined by the numeral of the associated line (1, ... 7) and the letter of the associated column (A, ... E) of the matrix (8).

7. An electro-optical display device as claimed in Claim 3, characterized in that all display elements (9) of a character (C1, C2, C16) comprise a common liquid crystal layer, the three groups of the counter electrodes (13) each form an associated upper (10), central (11), and lower (12) counter electrode of the character (C1, C2, C16) and for a duplex control of the character (C1, C2, C16) the upper counter electrode (10') and the lower counter electrode (12) are electrically conductively interconnected.

8. An electro-optical display device as claimed in Claim 5, characterized in that all display elements (9) of a character (C1, C2, C16) comprise a common liquid crystal layer and the four groups of the counter electrodes (13) each time form a coherent upper (25), a first central (25), a second central (27), and a lower (28) counter electrode of the character (C1, C2, C16).

9. An electro-optical display device as claimed in Claim 7 or 8, characterized in that several characters (C1, C2, C16) are arranged beside each other to form a line, that all characters (C1, C2, C16) of the line comprise a common liquid crystal layer, and that each time the upper counter electrode (10, 25), the central counter electrodes (11, 26, 27), and the lower counter electrodes (12, 28) of all the characters (C1, C2, C16) of the line are electrically conductively interconnected.

FIG.1

FIG.2

0164152

FIG.3

FIG.4

FIG. 5

FIG.6

0164152

FIG.7